# EUROPEAN PATENT SPECIFICATION

(11) **EP 2 154 839 B1**
(45) Date of publication and mention of the grant of the patent: **22.05.2013**
(21) Application number: 07744820.7
(22) Date of filing: 06.06.2007
(51) Int. Cl.: H04L 12/70

(54) **RELAY DEVICE AND TERMINAL**
RELAYEINRICHTUNG UND ENDGERÄT
DISPOSITIF DE RELAIS ET TERMINAL

(43) Date of publication of application: 17.02.2010
(73) Proprietor: Fujitsu Limited, Kawasaki-shi, Kanagawa 211-8588 (JP)
(72) Inventor: SHINOZAKI, Atsushi, Kawasaki-shi Kanagawa 211-8588 (JP)
(74) Representative: Lewin, David Nicholas
(86) International application number: PCT/JP2007/061477
(87) International publication number: WO 2008/149434

(56) References cited:
- EP-A2- 1 507 370
- JP-A- 09 298 559
- JP-A- 62 214 744
- US-A1- 2002 156 910
- US-A1- 2006 104 298

## Description

### Technical Field

The present invention relates to a relay device and a terminal unit. Particularly, the present invention is suitably applied to a relay device for relaying data on a network and a terminal unit for receiving data relayed by the relay device.

### Background Art

Recently, as the function of notifying a network status, there has been proposed an ECN (Explicit Congestion Notification RFC 3168). The ECN is implemented on TCP/IP. A relay device notifies a data receiving end of occurrence of congestion using a CE (Congestion Experienced) flag in an IP header, and the receiving end notifies a data transmitting end of the occurrence of the congestion using an ECN Echo flag in the TCP. Upon reception of the ECN Echo flag, the transmitting end reduces a transmission rate, and transmits data after adding a CWR (Congestion Window Reduced) flag to a TCP header of the data. The transmitting end thus reduces the transmission rate, which makes it possible to suppress data from being discarded by the relay device due to the congestion, while the receiving end can recognize from the CWR flag that the transmission rate has been reduced.

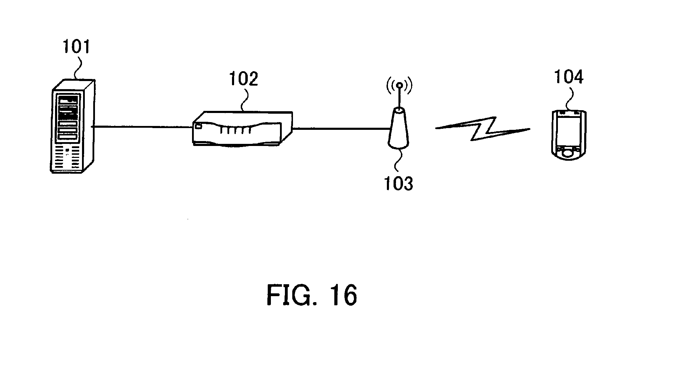

FIG. 16 is a view useful in explaining the ECN. In FIG. 16, a wireless network comprises a media server 101, a wireless network gateway 102, an access point 103, and a terminal 104.

For example, the media server 101 stores video data for providing the terminal 104 with a real-time streaming service. The media server 101 and the wireless network gateway 102 are connected by a wired network.

The wireless network gateway 102 adjusts the differences between protocols on a side toward the media server 101 and protocols on a side toward the access point 103, for connection between networks of the two sides. The access point 103 performs wireless communication with the terminal 104 under the control thereof.

In the wireless network configured as above, when congestion occurs in the wireless network gateway 102, the wireless network gateway 102 notifies the terminal 104 of the occurrence of the congestion using the CE flag in the IP header. The terminal 104 notifies the media server 101 of the occurrence of the congestion using the ECN Echo flag in the TCP header. Upon reception of the ECN Echo flag, the media server 101 reduces a transmission rate, and adds the CWR flag to the TCP header for transmission of data. This makes it possible to suppress data from being discarded by the wireless network gateway 102 due to the congestion, while the terminal 104 can recognize that the transmission rate has been reduced by the CWR flag in the TCP header.

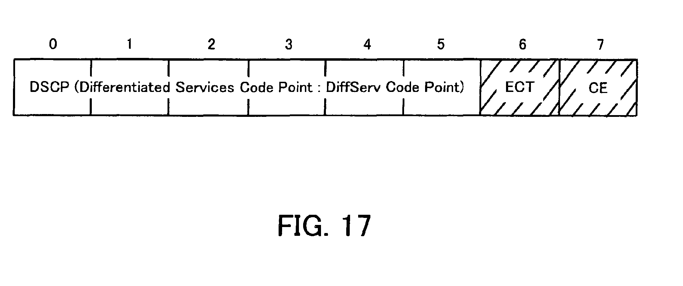

FIG. 17 is a view useful in explaining an ECN field of the IP header. FIG. 17 illustrates a DS (Differentiated Services) field of an IPv4 or IPv6 packet header. In the DS field, 0th to fifth bits form a DSCP (Differentiated Services Code Point) field, and sixth and seventh bits form an ECN field.

When a congestion occurs on the network, the relay device notifies the receiving end of the occurrence of the congestion using a CE flag in the ECN field. ECT in the ECN field is called "ECN Capable Transport", and CE in the same is called "Congestion Experienced".

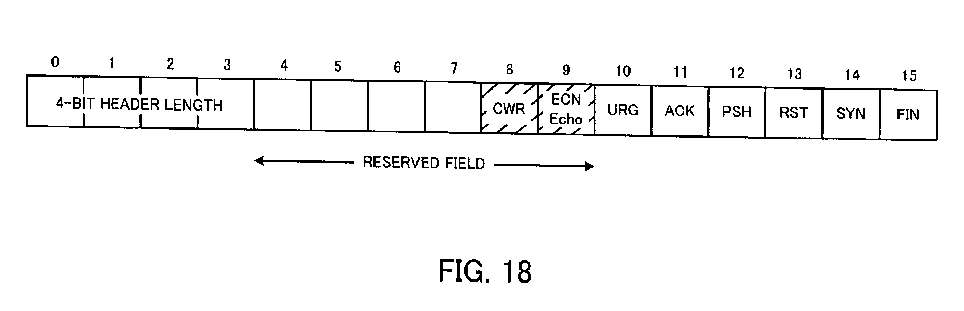

FIG. 18 is a view useful in explaining the ECN Echo flag and the CWR flag in the TCP header. In FIG. 18, there are shown a header length field, a reserved field, and a code bit field of the TCP header. As illustrated in FIG. 18, the reserved field has a 6-bit length, an eighth bit indicates the CWR flag, and a ninth bit indicates the ECN Echo flag.

Upon reception of the CE flag from the relay device, the receiving end notifies the transmitting end of the occurrence of the congestion using the ECN Echo flag in the reserved field, illustrated in FIG. 18. In response to the ECN Echo flag received from the receiving end, the transmitting end reduces the transmission rate, and adds the CWR flag to the TCP header for transmission of data. As described above, when congestion occurs on the network, the transmitting end reduces the transmission rate so that the relay device is capable of suppressing discarding of data due to the congestion. Further, the receiving end is capable of recognizing from the CWR flag in the TCP header that the transmitting end has reduced the transmission rate.

Conventionally, there has been proposed a bulk transfer device that is capable of monitoring a currently connected line by changing an increment by which a sequence number is incremented (see e.g. Patent Literature 1).
Patent Literature 1: Japanese Laid-Open Patent Publication (Kokai) No. 2000-165475

US 2002/0156910 discloses a congestion detecting section and control section.

EP 1,507,370 discloses a communication control method and system.

US 2006/0104298 discloses congestion control in a network.

JP 09-298559 describes a data processing system which divides data into two or more blocks and adds other information to the to the data outputted by changing a row order of the block data outputted.

JP 62-214744 discloses a system for preventing the leakage of data.

### Disclosure of the Invention

### Problems to be Solved by the Invention

However, when the increment by which the sequence number is increased is switched, it is difficult for the receiving end to distinguish whether data is lost or the increment by which the sequence number is increased is switched, which can hinder data transmission.

It is an object of the present invention to provide a relay device which is capable of notifying a terminal unit of information concerning the relay device and the terminal unit which is capable of receiving information concerning the relay device, by another method.

It should be noted that, preferably, it is an object of the present invention not to restrict the information concerning the relay device to binary information. Further, it is another object of the present invention to prevent the amount of transmitted information from being increased during transmission of the information.

### Means for Solving the Problems

The present invention device is defined in the independent claims, to which the reader should now refer. Specific embodiments are defined in the dependent claims.

Preferably, the order of the data items is repeatedly used in a predetermined unit, the predetermined order being defined in a unit smaller than the predetermined unit.

Preferably, the order of the data items is repeatedly used in a predetermined unit, and the transmission order controller controls the transmission order of the data items such that converted order information which is formed by predetermined conversion of the order information and is repeated in a unit smaller than the predetermined unit is in a predetermined order.

### Advantageous Effects of the Invention

The present invention is capable of providing a relay device that is capable of notifying a terminal unit of information concerning the relay device and the terminal unit capable of receiving the information concerning the relay device, by a novel method.

Further, it is possible to maintain the relationship between data items and order information that is added to the data items so as to indicate an order of the data items. This makes it unnecessary to rewrite the order information in the relay device.

The above and other objects, features and advantages of the present invention will become apparent from the following description when taken in conjunction with the accompanying drawings which illustrate preferred embodiments of the present invention by way of example.

### Brief Description of the Drawings

FIG. 1 illustrates an example of a relay device according to the present invention;
FIG. 2 illustrates a variation of the relay device;
FIG. 3 illustrates an example of the construction of a network to which is applied the relay device according to the present invention;
FIG. 4 illustrates a specific example of the construction of the network to which is applied the relay device;
FIG. 5 is a view useful in explaining notification of a state of congestion;
FIG. 6 illustrates patterns for rearranging transmission data;
FIG. 7 illustrates examples of patterns for use in rearranging transmission data;
FIG. 8 is a view useful in explaining a method by which a terminal unit that receives data recognizes a rearrangement pattern;
FIG. 9 illustrates an example of information notified from a switch to the terminal;
FIG. 10 illustrates an example of a case where the switch segments transmission data to transmit the same;
FIG. 11 is a view useful in explaining a resynchronization process carried out by the terminal;
FIG. 12 is a view useful in explaining a synchronization process carried out by the terminal;
FIG. 13 is a functional block diagram of the switch;
FIG. 14 is a functional block diagram of a notification information controller;
FIG. 15 is a functional block diagram of the terminal;
FIG. 16 is a view useful in explaining an explicit congestion notification;
FIG. 17 is a view useful in explaining an ECN field of an IP header; and
FIG. 18 is a view useful in explaining an ECN Echo flag and a CWR flag in a TCP header.

### Best Mode of Carrying out the Invention

Hereafter, the present invention will be described in detail with reference to the drawings.

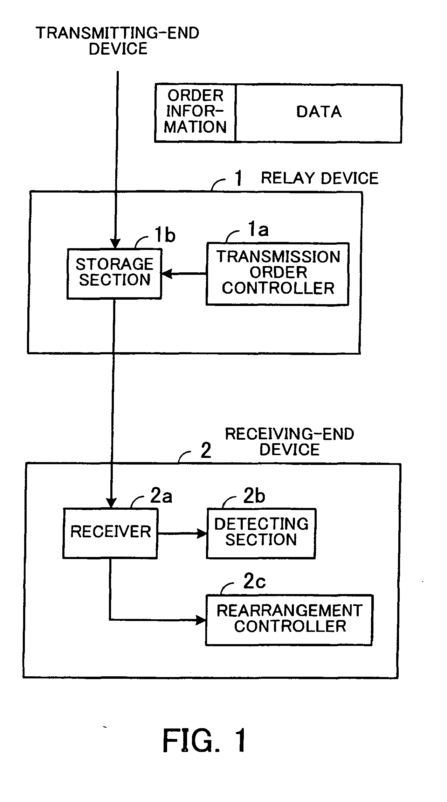

FIG. 1 illustrates an example of a relay device according to the present invention. As illustrated in FIG. 1, the relay device 1 includes a transmission order controller 1a and a storage section 1b.

The relay device 1 receives data items having order information (e.g. information which is capable of defining the order of sequence numbers or the like, and hereinafter, a description will be given of a case where sequence numbers are used) added thereto, and stores the data items in the storage section 1b. Although basically, it is desirable to receive data items in the order of sequence numbers, it is not necessarily required to receive data items in the order of sequence numbers.

The transmission order controller 1a reads out data items from the storage section 1b based on sequence numbers and transmits the data items, for relaying. In doing this, the transmission order controller 1a reads out the data items from the storage section 1b and transmits the same such that the data items are transmitted in an order corresponding to information desired to be notified to a receiving-end device 2 (order different from the order of the sequence numbers).

For example, when sequence numbers 1 to 10 are used in one cycle, the transmission order controller 1a reads out data items such that the sequence numbers are transmitted (transferred) in an order of 3, 1, 2, and 4 to 10. This order indicates information (e.g. a message saying that congestion has occurred in the relay device 1).

This causes a detecting section 2b of the receiving-end device 2 to detect that a receiver 2a of the receiving-end device 2 has received the data items not in the order of sequence numbers 1, 2 and 3 but in the order of the sequence numbers 3, 1 and 2, and hence the detecting section 2b can detect that information corresponding to the order of the sequence numbers 3, 1 and 2 has been transmitted from the relay device 1. Preferably, both the relay device 1 and the receiving-end device 2 include respective storage sections for storing pieces of information (messages) corresponding to a plurality of respective kinds of orders different from the order of the sequence numbers, and the relay device 1 reads out, from the storage section thereof, an order number corresponding to a message desired to be transmitted to the receiving-end device 2, and transmits the message in the order indicated by the order number.

On the other hand, the detecting section 2b of the receiving-end device 2 checks matching between predetermined orders stored in the storage section and the order of received data items to determine to which of the predetermined orders stored in the storage section thereof the order of received data items corresponds, and obtains information (message) which is associated with the corresponding order and is stored in the storage section.

Although in the above example, an order defined in repetition units (3) smaller than repetition units (10) of sequence numbers is used, this is not limitative, but of course, the order may be defined in units of 10, which is the same as the repetition units of sequence numbers.

Now, the order may be controlled by performing modulo operations (e.g. modulo-3 operations) on the sequence numbers for conversion to thereby handle the sequence numbers as numbers repeated in units (3) of sequence numbers smaller than the repetition units (10) of sequence numbers, such that an order indicated by the results of the modulo operations on the sequence numbers becomes a predetermined order different from the order of the sequence numbers.

More specifically, when the modulo-3 operations are performed on a sequence of numbers 1, 2, 3, 4, 5 and 6, remainders 1, 2, 0, 1, 2 and 0 are obtained, but it is possible to control the order such that the results of the modulo operations indicate an order of 2, 1, and 0. In other words, the sequence numbers 1, 2, 3, 4, 5 and 6 can be rearranged in an order of 2, 1, 3, (5, 4 and 6).

The detecting section 2b of the receiving-end device 2 performs the same modulo-3 operations on the sequence numbers added to the respective data items sequentially received by the receiver 2a, and sequentially determines, by calculation, respective values of 2, 1 and 3, whereafter the storage section of the receiving-end device 2 obtains information (message) associated with this order.

This makes it possible to give information to the receiving-end device 2 by controlling the transmission order. Of course, it is also possible to continuously and repeatedly perform a special order control associated with the message, for reliability of information transmission. For example, in the case of the modulo-3 operations, it is also possible to transmit information such that transmitted data items are in the order of the sequence numbers 2, 1, 3, 5, 4 and 6, and send the same information twice. In the first example, the sequence numbers may be transmitted twice in the order of 3, 1, 2, and 4 to 10, to thereby enhance the reliability of information transmission.

The receiving-end device 2 includes a rearrangement controller 2c, and outputs data items received by the receiver 2a by rearranging the data items based on sequence numbers in the order of the sequence numbers (the rearrangement can be easily performed by storing the received data items in a memory and controlling the order of reading out of the data items). It is possible to set an upper layer processor or the like as an output destination of data items.

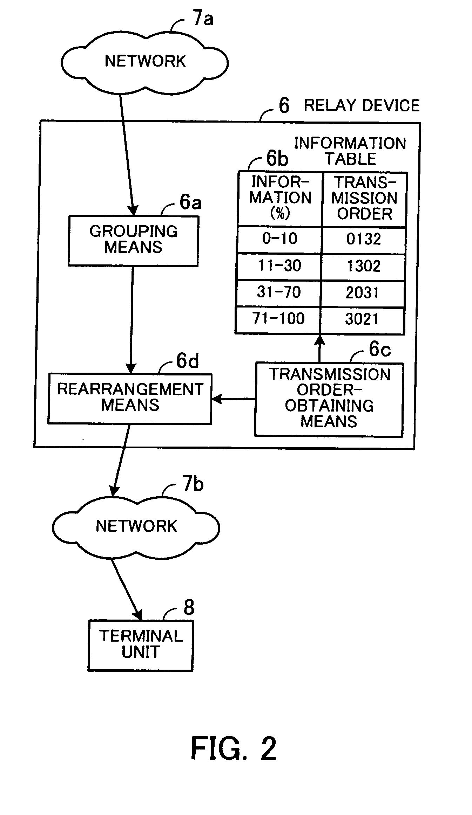

Next, a variation of the relay device will be described with reference to drawings. FIG. 2 illustrates the variation of the relay device. Here is shown a relay device 6 that relays data items on networks 7a and 7b, comprising grouping means 6a for grouping the data items, an information table 6b configured to store information concerning the relay device 6, the information being notified to a terminal unit 8 that receives the data items, and a transmission order of the data items in a group, in association with each other, transmission order-obtaining means 6c for obtaining the transmission order corresponding to the information to be notified to the terminal unit 8, by referring to the information table 6b, and rearrangement means 6d for rearranging the data items in the group in the transmission order obtained by the transmission order-obtaining means 6c.

According to the relay device 6 configured as above, by rearranging data items to be transmitted to the terminal unit 8, the terminal unit 8 is notified of a plurality of pieces of information concerning the relay device 6.

Further, there is illustrated a terminal unit that receives data items relayed by a relay device, comprising grouping means for grouping the data items, transmission order-obtaining means for obtaining a transmission order of the data items that are rearranged in a group and are transmitted by the relay device, an information table configured to store information concerning the relay device, the information being notified by the relay device, and the transmission order, in association with each other, information obtaining means for obtaining information corresponding to the transmission order obtained by the transmission order-obtaining means, by referring to the information table, and rearrangement means for rearranging the transmission order of the data items back to an order of the data items arranged before being rearranged by the relay device.

According to the terminal unit configured as above, a plurality of pieces of information on the relay device are obtained by respective orders of rearrangement of data items transmitted from the relay device.

This makes it possible to prevent information concerning the relay device from being restricted to binary information. Further, in transmitting the information, it is possible to prevent an increase in the amount of transmitted information. Further, it is also possible to obtain a new method of transmitting information from the relay device to the terminal unit.

A more detailed description will be given of the variation illustrated in FIG. 2. The relay device 6 includes the grouping means 6a, the information table 6b, the transmission order-obtaining means 6c and the rearrangement means 6d. For example, the relay device 6 relays data items from a media server connected to the network 7a, and transmits the data items to the terminal unit 8 via the network 7b. The relay device 6 can be disposed between networks different from each other or within the same network.

The grouping means 6a groups data items transmitted from the media server. The data items transmitted from the media server are packets, for example. The grouping means 6a groups the packets into groups each formed by a predetermined number of (4) packets, for example. The first to be grouped is set to the first of the sequence numbers, for example.

The information table 6b stores pieces of information concerning the relay device 6 which are to be notified to the terminal unit 8, and transmission orders of packets grouped by the grouping means 6a within the group thereof, in association with each other.

For example, the information concerning the relay device 6 can be used as information indicative of a congestion state of packets in the relay device 6. The transmission order indicates the order of transmission of a plurality of packets (four packets) within a group to the terminal unit 8. For example, a transmission order 0132 illustrated in FIG. 2 indicates that respective sets of packets of 0123 (the numerals indicate a sequence of four packets, and the order thereof is determined based on information indicative of an order added to each packet (e.g. sequence numbers), 0123, 0123, ..., sequentially arranged in groups, are rearranged in the order of 0132, 0132, 0132, ..., when the packets are transmitted.

The transmission order-obtaining means 6c obtains a transmission order corresponding to information which is to be notified to the terminal unit 8 by referring to the information table 6b. For example, in the above-described example, when a congestion of 10% occurs in the relay device 6, the transmission order-obtaining means 6c obtains a transmission order (0132) of packets corresponding to the congestion of 10%, from the information table 6b.

The rearrangement means 6d rearranges the packets in each group formed by the grouping means 6a, in the transmission order obtained by the transmission order-obtaining means 6c. For example, in the above-described example, sets of packets in respective groups are rearranged in the order of 0132, 0132, 0132, ..., based on the sequence numbers or the like.

The terminal unit 8 groups the received packets, similarly to the relay device 6, for obtaining a transmission order of packets in each group. In the above-described example, the terminal unit 8 groups the received packets into groups of four packets, similarly to the relay device 6, and obtains the transmission order of the packets in each group.

The terminal unit 8 has the same information table 6b as that of the relay device 6, and obtains a congestion state notified by the relay device 6 by referring to the information table 6b. In the above-described example, since the transmission order 0132 of packets (the fact that the sequence numbers of the received packets are 0, 1, 3 and 2 in the order of reception of the packets) is detected in each group, information notifying that a congestion of 10% (0 to 10%) has occurred is obtained. The terminal unit 8 rearranges the packets rearranged by the relay device 6 back to their original appropriate order 0123 based on the sequence numbers or the like.

As described above, the relay device 6 has the information table 6b storing a plurality of pieces of information concerning the relay device 6 and transmission orders of packets, in a state associated with each other. The relay device 6 refers to the information table 6b and rearranges the transmission order of packets to be transmitted to the terminal unit 8 in each group according to information to be notified to the terminal unit 8.

This makes it possible to notify the terminal unit 8 of the plurality of pieces of information concerning the relay device 6 through rearrangement of packets to be transmitted to the terminal unit 8. By associating three or more rearrangement orders with three or more pieces of information using the information table 6b, it is also possible to notify the terminal unit 8 of three or more pieces of information concerning the relay device 6.

Next, an embodiment of the present invention will be described in detail with reference to the drawings.

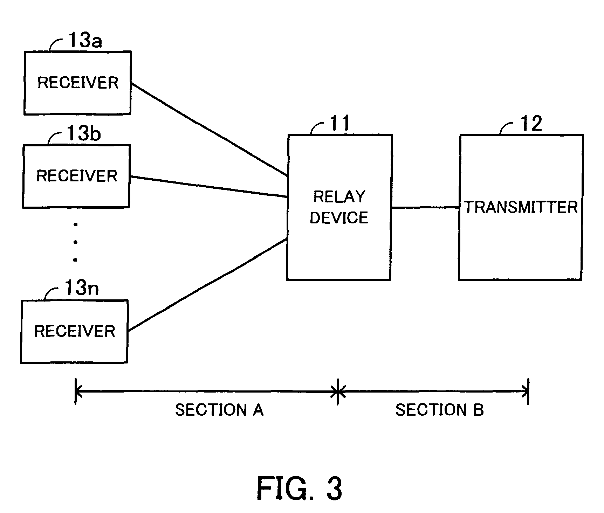

FIG. 3 illustrates an example of the construction of a network to which is applied a relay device according to the present embodiment. In FIG. 3, there are illustrated the relay device 11, a transmitter 12, and receivers 13a, 13b, ..., and 13n.

The transmitter 12 stores video data e.g. for providing the receivers 13a, 13b, ..., and 13n with a real-time streaming service. The relay device 11 relays data transmitted from the transmitter 12 to transmit the data to the receivers 13a, 13b, ..., and 13n.

The relay device 11 detects a congestion state of data transmitted from the transmitter 12 to the receivers 13a, 13b, ..., and 13n, and notifies the receivers 13a, 13b, ..., and 13n of the congestion state. At this time, the relay device 11 notifies the receivers 13a, 13b, ..., and 13n not only of a binary state corresponding to whether or not a congestion has occurred but also of a plurality of congestion states. For example, the relay device 11 notifies the receivers 13a, 13b, ..., and 13n of a plurality of congestion states, such as a state where a congestion of 10% has occurred, a state where a congestion of 20% has occurred, a state where a congestion of 30% has occurred, ...

The notification of the congestion states by the relay device 11 becomes particularly effective when a transmission rate in a section A is lower than a transmission rate in a section B, as viewed in FIG. 3. That is, the notification of the congestion states by the relay device 11 is effective when data items transmitted from the transmitter 12 are held back in a queue at the relay device 11 and the congestion state of the data items is notified to the receivers 13a, 13b, ..., and 13n. Although the method of transmitting data items in the sections A and B is not particularly limited, it is contemplated that a system in which the transmission rate in the section A tends to become lower than the transmission rate in the section B is a case in which the section A belongs to a wireless network and the section B belongs to a wired network.

Of course, also when the transmission rate in the section B is lower than the transmission rate in the section A, the relay device 11 can be effectively applied. As such a case, there is contemplated a case where the receivers 13a, 13b, ..., and 13n transmit data items to the transmitter 12, and although the transmission rates of the individual receivers 13a, 13b, ..., and 13n in the section A are low, a band of the section A is broader than a band of the section B.

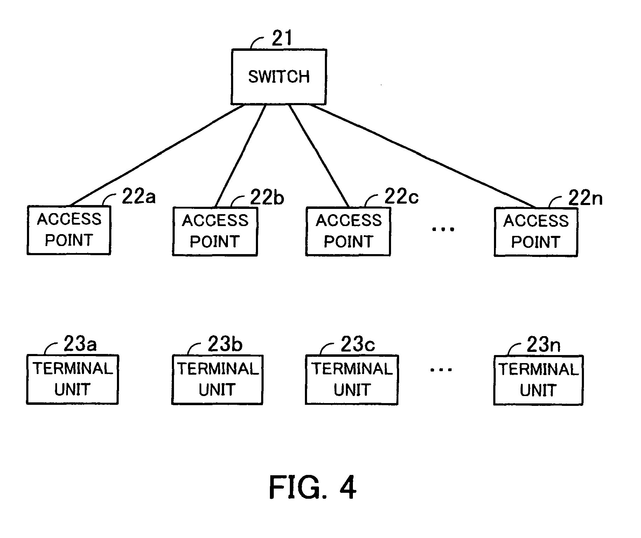

FIG. 4 illustrates a specific example of the construction of a network to which is applied the relay device. FIG. 4 illustrates an example of a wireless LAN (Local Area Network) which is implemented by a plurality of access points 22a, 22b, 22c, ..., and 22n and a switch 21 for controlling the access points. Wireless access is performed between the access points 22a, 22b, 22c, ..., and 22n, and terminal units 23a, 23b, 23c, ..., and 23n. In FIG. 4, a section between the switch 21 and the terminal unit 23a corresponds to the section B in FIG. 3.

The switch 21 corresponds to the relay device 11 in FIG. 3, and performs switching for outputting data items received from a media server (not illustrated) to a desired one of the access points 22a, 22b, 22c, ..., and 22n. Further, the switch 21 notifies the terminals 23a, 23b, 23c, ..., and 23n of a congestion state of data items.

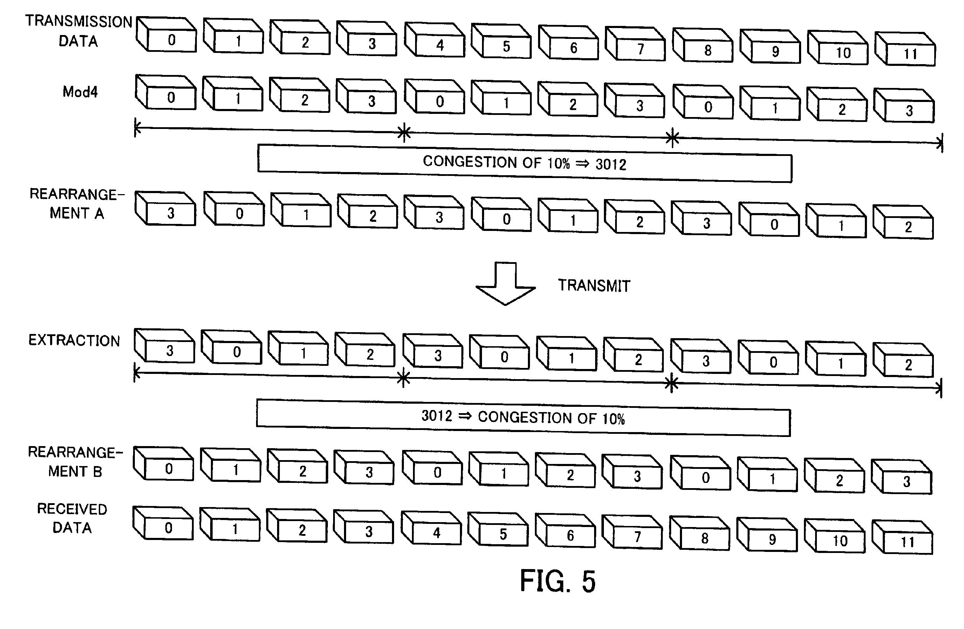

FIG. 5 is a view useful in explaining notification of a congestion state. Transmission data items illustrated in FIG. 5 are received by the switch 21 e.g. from the media server, and are transmitted to the terminal units 23a, 23b, 23c, ..., and 23n. The following description will be given assuming that the transmission data items are to be transmitted to the terminal unit 23a.

The transmission data items are packets, for example. In the TCP and the RTP (Real-time Transport Protocol), sequence numbers are added to the packets. In the example illustrated in FIG. 5, sequence numbers 0, 1, 2, 3, 4, 5, 6, 7, ... are added to transmission data items, respectively.

The switch 21 performs modulo calculation using a predetermined value on the sequence numbers of the received transmission data items. In the example illustrated in FIG. 5, the switch 21 performs modulo calculation using a modulo 4 (Mod 4). Therefore, the modulo calculation on the transmission data items which have respective sequence numbers 0, 1, 2, ..., result in 0, 1, 2, 3, 0, 1, 2, 3, ..., as illustrated in Mod 4 in FIG. 5.

The switch 21 sequentially groups the transmission data items into groups of four data items. For example, the switch 21 sequentially groups the sequence numbers such that the sequence numbers 0 to 3 are grouped into a first group, and then the sequence numbers 4 to 7 are grouped into a second group. After that, the switch 21 rearranges grouped transmission data items in each grouped range. There are a plurality of rearrangement patterns of the transmission data items, and the patterns can be changed according to information to be notified to the terminal unit 23a.

For purposes of simplicity, the transmission data items are rearranged and transmitted such that order information indicative of a predetermined order (e.g. sequence numbers or the results of the modulo calculation) becomes an order different from the predetermined order, i.e. a first order of arrangement, a second order of arrangement, ..., or an N-th order of arrangement (N is a natural number not smaller than 3).

For example, when an order of A, B, C, D, A, B, C, D, A, ... is included in transmission packets as order information indicative of an order of alphabet letters, which is the predetermined order, the transmission data items are rearranged in an order of B, D, A, and C as a first order, or in an order of D, C, B, and A as a second order, and then are transmitted. In this case, preferably, the transmission data items are repeatedly transmitted plurality of times in the first (or second) order.

For example, in the example illustrated in FIG. 5, since the modulo value is 4, the switch 21 groups the transmission data items into groups of four data items, as illustrated in Rearrangement A in FIG. 5. Then, the switch 21 rearranges transmission data items within each grouped range such that the results of the modulo calculation (modulo results) indicate an order of 3012. This makes it possible for the switch 21 to notify the terminal unit 23a that a congestion of 10% has occurred, for example. Further, to notify the terminal unit 23a of another piece of congestion information, e.g. to the effect that a congestion of 30% has occurred, the switch 21 rearranges transmission data items in a pattern (e.g. 0312) corresponding to the congestion information, and transmits the rearranged transmission data items to the terminal unit 23a.

The switch 21 has a table that associates pieces of information to be notified to the terminal unit 23a with transmission patterns of transmission data items, and rearranges transmission data items based on the table. In the above-described example, the table stores the state of occurrence of the congestion of 10% and the transmission pattern of 3012 in a state associated with each other, and the state of occurrence of the congestion of 30% and the transmission pattern of 0312 in an state associated with each other.

As described above, the switch 21 is capable of notifying the terminal unit 23a of information by associating patterns for rearranging transmission data items with a plurality of pieces of information, respectively, and rearranging transmission data items such that the transmission data items are associated with one of the pieces of information to be notified to the terminal unit 23a.

Moreover, even when the above-described rearrangement is carried out, it only hinders orderly arrival of the sequence numbers of the transmission data items, and if a time period required for the rearrangement has passed, the sequence numbers are acquired basically without any loss. This makes it possible to suppress confusion between the rearrangement and loss of data items.

In the example illustrated in FIG. 5, by rearrangement of transmission data items by the switch 21, the transmission data items are transmitted such that the sequence numbers thereof are arranged in an order of 3, 0, 1, 2, 7, 4, 5, 6, 11, 8, 9, 10, ...

The terminal unit 23a on a side receiving the pieces of information sequentially performs the modulo calculation on the sequence numbers of the data items received from the switch 21, that is, on the sequence numbers added to received packets by using the same modulo value as used in the switch 21.

In the example illustrated in FIG. 5, since the switch 21 performs the modulo operations using the modulo 4, the terminal unit 23a performs modulo operations on the received data items using the modulo 4.

The switch 21 transmits the transmission data items such that the sequence numbers of the transmission data items are arranged in the order of 3, 0, 1, 2, 7, 4, 5, 6, 11, 8, 9, 10, ..., as described above, and hence the results of the modulo calculation performed by the terminal unit 23a indicate an order of 3, 0, 1, 2, 3, 0, 1, 2, 3, 0, 1, 2, ..., as viewed in EXTRACTION in FIG. 5.

The terminal unit 23a has the same patterns of the rearranged data items as those of the switch 21 and pieces of information associated with the patterns. That is, the terminal unit 23a has a table storing arrangement patterns obtained from modulo results and pieces of information corresponding to the respective patterns in association with each other. This enables the terminal unit 23a to obtain information notified by the switch 21 based on the modulo results that are calculated based on the received data items.

In the example illustrated in FIG. 5, the results of the modulo calculation on the data items received from the switch 21 indicate the order of 3012. Therefore, from the modulo results, the terminal unit 23a can obtain the information to the effect that a congestion of 10% has occurred in the switch 21. Even if the terminal unit on the receiving side is not separately notified of timing in which the rearrangement is started, the terminal unit detects that 3, 0, 1 and 2 are included in the modulo results when the modulo results are sequentially arranged in the order of reception of the data items, whereby the terminal unit can obtain the information to the effect that a congestion of 10% has occurred in the switch 21.

Since the data items received by the terminal unit 23a have been rearranged by the switch 21, the terminal unit 23a is required to rearrange the order of the received data items back to a proper one. In short, the terminal unit 23a is required to rearrange the received data items in their original order.

For the rearrangement, the received data items can be rearranged e.g. in the order of their sequence numbers or may be rearranged in a manner such that packets having respective detected numerals in a sequence of 3012 as modulo values are grouped into one group, and the modulo values are rearranged in proper order in the group, as illustrated in REARRANGEMENT B in FIG. 5. For example, received data items are rearranged in each group of four data items such that the modulo results are in the order of 0123. Anyway, as illustrated in RECEIVED DATA in FIG. 5, the data items received from the switch 21 are rearranged such that their sequence numbers are in the order of 0, 1, 2, 3, 4, 5, ..., i.e. in a proper order.

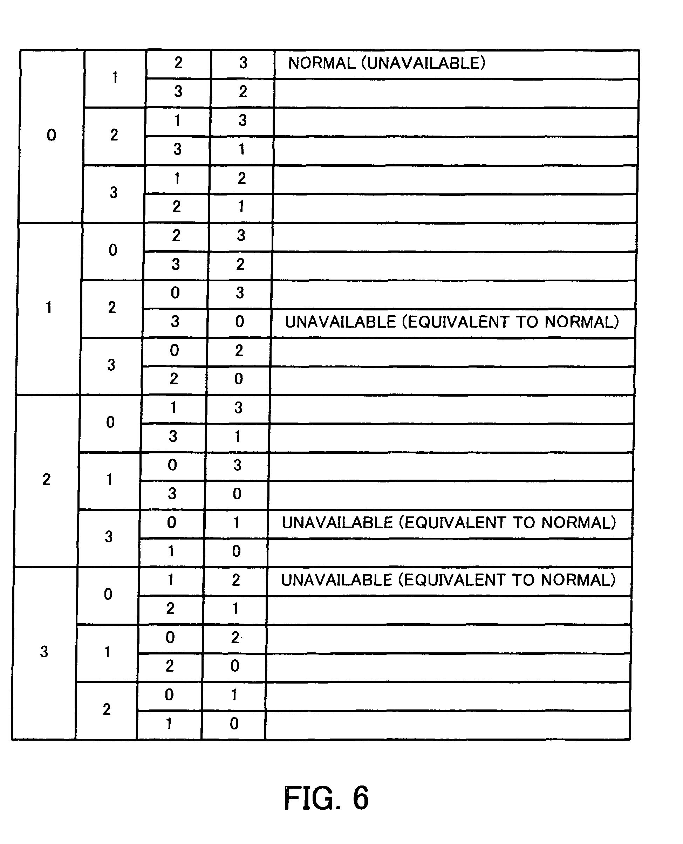

FIG. 6 illustrates patterns for rearranging transmission data items. FIG. 6 illustrates examples of the transmission data-rearranging patterns used when modulo-4 operations are performed. As shown in FIG. 6, in the case of the modulo-4 operations, there are 24 types of rearrangement of the combination of modulo result values according to which the transmission data items can be rearranged.

Each of rightmost rows in FIG. 6 indicates whether or not a rearrangement pattern appearing on the left side thereof is in use. In the illustrated example, a rearrangement pattern obtained according to normal modulo results (in a case where sequence numbers are sequentially incremented by 1) is not used, since it corresponds to a normal order of arrangement. Of course, it is possible to notify the terminal unit 23a that the transmission data items are normally transmitted, by maintaining this normal order of arrangement.

Further, it is desirable that the rearrangement patterns of the transmission data items for causing the modulo results to indicate the respective orders of 1230, 2301 and 3012, are not used for adding information to the transmission data items.

This is because when information is notified to the terminal unit 23a using the above rearrangement patterns, the orders of 1230, 2301 and 3012 are similar to the normal order of 0, 1, 2, and 3, which makes erroneous detection by the terminal unit 23a liable to occur.

For example, if the transmission data for causing the modulo results to indicate the order of 0, 1, 2, and 3 is repeatedly transmitted, there is a fear that not only a pattern of 0, 1, 2, 3 but also a pattern of 1, 2, 3, 0 is likely to be detected.

In case a packet loss (e.g. loss of 0 as a modulo result) occurs, the terminal unit comes to detect the modulo results in the order of 1, 2, 3 and 0, which makes erroneous transmission of information liable to occur.

Of course, unavailable rearrangement patterns appearing in FIG. 6 can be put into use. In doing this, it is desirable to suppress errors e.g. by performing synchronization so as to determine from which position in a sequence of modulo results, recognition of a pattern is to be started.

The above synchronization can also be performed during a time period over which the sequence numbers (or the modulo calculation results) of the transmission data items are transmitted in the normal order of 0, 1, 2, 3, ... More specifically, when the sequence numbers of 0, 1, 2, 3, ... are received, by recognizing a first one of repeated sequence numbers, and counting data items by a predetermined number (four, in the illustrated example) with reference to the first one, it is possible to identify groups of the data items. If the transmission in the normal order of 0, 1, 2, 3, ... is performed once in N (N is a natural number not smaller than 2) times of periodic transmissions, the synchronization can be performed periodically.

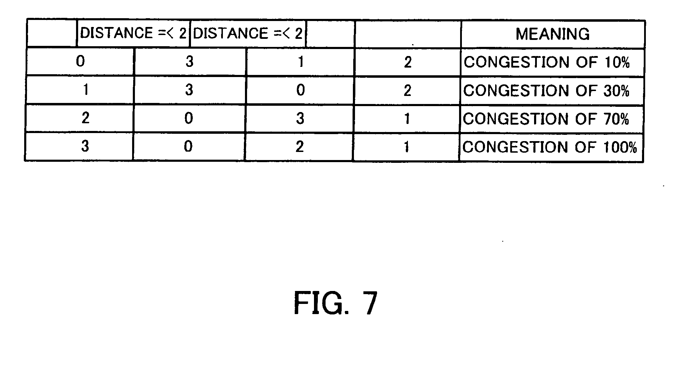

FIG. 7 illustrates an example of a pattern for use in rearranging transmission data items. In FIG. 7, available rearrangement patterns of the transmission data items are further limited compared with FIG. 6.

In FIG. 7, a restriction is placed on the rearrangement patterns of the transmission data items such that the distance (difference) between adjacent modulo results is partially not smaller than 2. For example, in a pattern of rearrangement of transmission data items in FIG. 7 which indicates occurrence of a congestion of 10%, the distance between adjacent modulo results 0 and 3 is equal to 3, and the distance between adjacent modulo results 3 and 1 is equal to 2. Similarly, in a pattern of rearrangement of transmission data items which indicates occurrence of a congestion of 30%, the distance between adjacent modulo results 1 and 3 is equal to 2, and the distance between adjacent modulo results 3 and 0 is equal to 3.

Although it is assumed that basically, on the network, the transmission order of data items is rarely transposed, by placing a restriction on the manner of arrangement of sequence numbers, as described above, it is possible to cope with unintended transposition of the order of data items.

For example, let it be assumed that in the example of the arrangement for the congestion of 10% in FIG. 7, data items corresponding to modulo results of 3 and 1, respectively, are transposed during transmission. In this case, the terminal unit 23a receives data items including the modulo results of 0132. Although the difference between numerals currently appearing as 0 and 1 in the modulo results of 0132 should originally take a value not smaller than 2, but it actually takes 1, and therefore the terminal unit 23a can recognize that the received data items have not been transmitted in an intended order. In this case, the terminal unit 23a can handle the current transmission as an error.

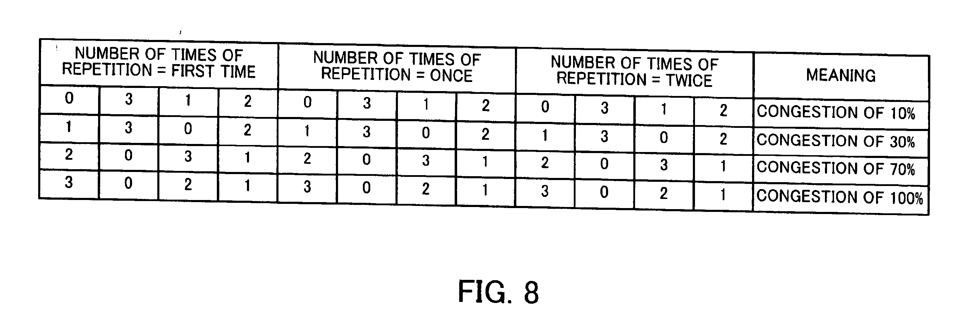

FIG. 8 is a view useful in explaining a method by which the terminal unit that receives data recognizes a rearrangement pattern. The terminal unit 23a performs modulo calculation on data items transmitted from the switch 21. The terminal unit 23a is configured to judge, when repeatedly receiving the same pattern of modulo results in a plurality of groups, that the rearrangement pattern of the data items is effective.

For example, as illustrated in FIG. 8, when the terminal unit 23a receives data items that repeat the pattern of 0312 as the modulo results twice, the terminal unit 23a judges that the rearrangement pattern of the received data items is effective and recognizes that a congestion of 10% has occurred.

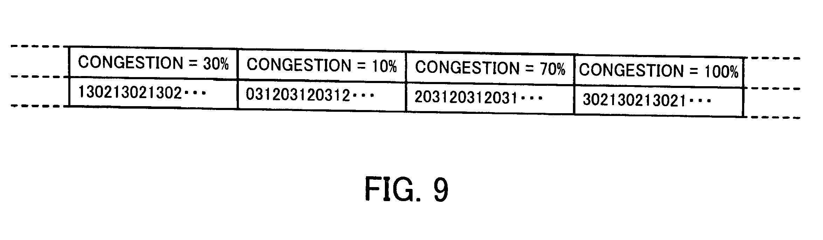

FIG. 9 illustrates an example of information notified from the switch to the terminal. The switch 21 may be configured such that it does not rearrange transmission data items only when a change in congestion has occurred but it continuously rearranges the transmission data items. That is, the switch 21 may be configured to transmit the rearranged transmission data items until a congestion state of the data items is changed.

For example, as illustrated in the FIG. 9 example, during a time period over which a state of a congestion of 30% continues, the switch 21 continues to transpose transmission data items such that modulo results indicate 1302 to transmit the transposed transmission data items to the terminal unit 23a. Then, when the congestion is reduced to 10%, the switch 21 continues to transpose transmission data items such that modulo results indicate 0312, and transmit the thus transposed transmission data items to the terminal unit 23a. Since the results of the modulo calculation on the received data items change from 1302 to 0312, the terminal unit 23a can recognize that the congestion state is changed from 30% to 10%.

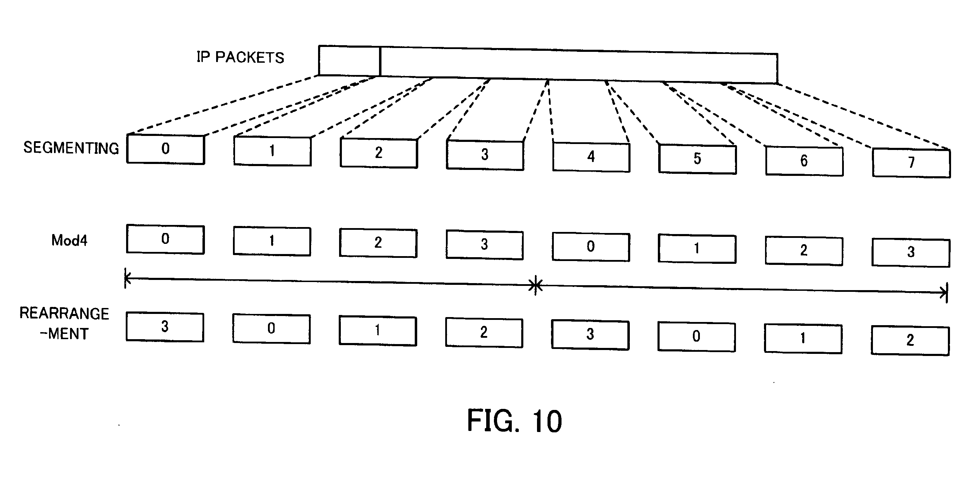

FIG. 10 illustrates an example of a case where the switch segments transmission data and transmit the segmented transmission data items. The switch 21 sometimes segments transmission data, such as IP packets, to transmit the segmented transmission data items to the terminal unit 23a. In this case, the switch 21 rearranges the segmented data items, similarly to FIG. 5, and transmits the rearranged data items to the terminal unit 23a. Of course, when the segmented data items are transmitted, rearrangement of the IP packets per se is not performed.

For example, as illustrated in FIG. 10, the switch 21 segments the IP packets. Sequence numbers 0, 1, 2, 3, 4, 5, 6 and 7 are added to the segmented data items. Therefore, in the illustrated example, the segmented data items are illustrated as examples of data items, and the sequence numbers added to the segmented data items are illustrated as an example of the order information.

The switch 21 performs modulo calculation on the sequence numbers of the segmented data items. In the example illustrated in FIG. 10, the switch 21 performs the modulo-4 operations as indicated by Mod 4 in FIG. 10.

The switch 21 groups the segmented data items using values obtained by modulo operations. Then, the switch 21 rearranges segmented data items within each grouped range. In the example illustrated in FIG. 10, the segmented data items are rearranged in the order of 3012.

As described above, in transmitting packets after segmenting the same, the switch 21 rearranges segmented data items and then transmits the rearranged data items.

The terminal unit 23a that receives the data items performs the modulo-4 operations on the sequence numbers of the received data items, in the same manner as described hereinabove with reference to FIG. 5. The terminal unit 23a can recognize information notified from the switch 21 based on a pattern of modulo results.

Further, since the received data items are transmitted after being rearranged by the switch 21, the terminal unit 23a rearranges the data items such that the modulo results are sequentially incremented by 1. That is, the terminal unit 23a rearranges the received data items such that they are in a proper order. This makes it possible for the terminal unit 23a to obtain data items in the order of sequence numbers as illustrated in SEGMENTATION in FIG. 10. By connecting the rearranged data items, the terminal unit 23a can obtain the IP packets transmitted by the switch 21.

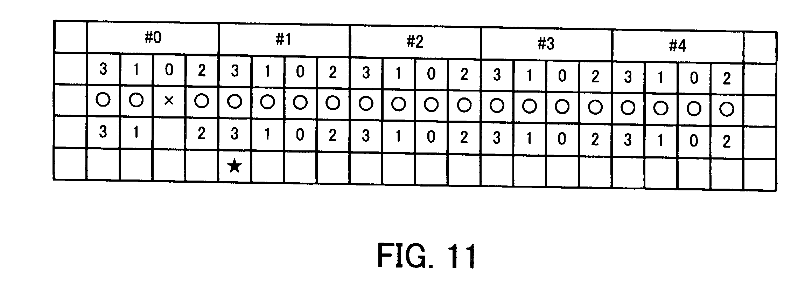

FIG. 11 is a view useful in explaining a resynchronization process carried out by the terminal. The switch 21 sometimes discards a data item to be transmitted to the terminal unit 23a e.g. due to occurrence of congestion. In this case, the sequence number of the discarded data item is lost, so that it appears to the terminal unit 23a as if the rearrangement pattern of received data items has changed. To cope with this inconvenience, the terminal unit 23a carries out the resynchronization process.

For example, let it be assumed that the switch 21 performs the modulo-4 operations on the sequence numbers to rearrange transmission data items such that the modulo results indicate an order of 3102. More specifically, as illustrated in Groups #0 to #4 in FIG. 11, the switch 21 groups four data items into one group, and as illustrated in a row below the row of the group names, rearranges the order of the transmission data items in each group such that the modulo results indicate the order of 3102.

Now, let it be assumed that although the switch 21 transmits the rearranged data items to the terminal unit 23a, a certain data item (data item of 0 as one of the modulo results) is discarded as indicated by X in FIG. 11. In this case, as illustrated in the fourth row from the top in FIG. 11, it appears to the terminal unit 23a as if the modulo results changed from 3102 to 3123, 1023, 1023, ... in the pattern.

As described above, when a data loss has occurred, the terminal unit 23a recognizes the same modulo result in one group of data items twice. For example, in the example illustrated in FIG. 11, the modulo results of 3123 are obtained due to the data loss, so that 3 is recognized twice.

In this case, upon receiving the same modulo results (3), the terminal unit 23a performs the resynchronization process (regrouping). That is, the synchronization is performed again from a portion indicated by an asterisk in FIG. 11. Thus, the terminal unit 23a can recognize the proper pattern 3102 of the modulo results again.

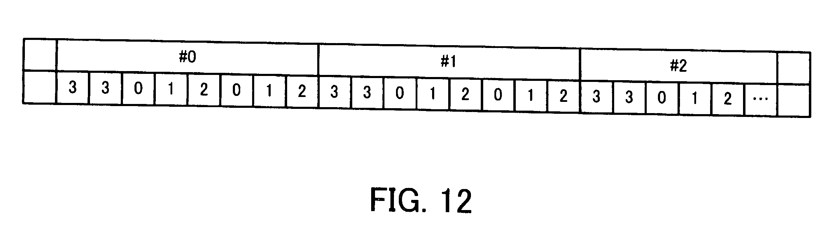

FIG. 12 is a view useful in explaining a synchronization process carried out by the terminal. The switch 21 can also rearrange and transmit data items such that the terminal unit 23a performs the synchronization of the rearrangement pattern of the data items. For example, the switch 21 is configured to add information indicative of a leading data item in one group to a start in the group.

The switch 21 collects each two groups of data items grouped using a modulo value, to thereby further form them into a new group. Then, within each new group, the switch 21 moves a first value in each of the two original groups to a start in the new group.

For example, let it be assumed that the switch 21 performs modulo-4 operations on transmission data items, and forms each four data items into one group to rearrange them such that their modulo values become 3012.

The switch 21 further collects each two groups of the rearranged data items, thereby forming them into a new group. That is, the switch 21 forms new groups of data items which take modulo values of 31023102 as results of modulo calculation. Then, out of the data items 31023102 of each new group, the switch 21 moves a first value 3 of each group data 3102 to first positions in the new group, to set the data items 33012012 as transmission data items. Therefore, data items transmitted by the switch 21 to the terminal unit 23a are as illustrated in FIG. 12.

When modulo results having the same value continues, the terminal unit 23a recognizes that a position where the two identical values are arranged corresponds to a start of each group of the rearranged data items. That is, the terminal unit 23a is configured to recognize a pattern for rearranging the data items with reference to the start. In the example illustrated in FIG. 12, the terminal unit 23a recognizes that a portion from modulo results of 33 to a modulo result continuous with the next modulo results of 33 forms a data rearranged group (new group). Further, the terminal unit 23a recognizes a rearrangement pattern 3102 within the recognized data rearranged group (within each of groups #0, #1, #2, ... in FIG. 12).

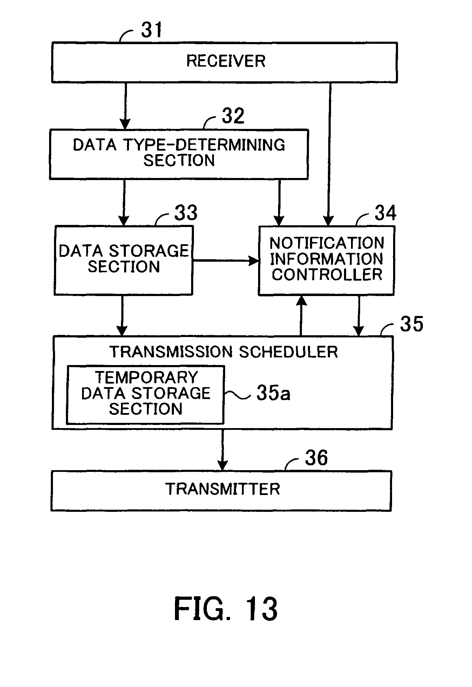

FIG. 13 is a functional block diagram of the switch. As illustrated in FIG. 13, the switch 21 includes a receiver 31, a data type-determining section 32, a data storage section 33, a notification information controller 34, a transmission scheduler 35 and a transmitter 36.

The receiver 31 receives data items from the networks. For example, the receiver 31 receives video data transmitted from the terminal unit 23a from the media server.

The data items received by the receiver 31 are IP packets, for example. The receiver 31 outputs the received data items to the data type-determining section 32, and notifies the notification information controller 34 of a data reception rate.

The data type-determining section 32 detects a session in which data items can be rearranged, and notifies the notification information controller 34 of the session. The data type-determining section 32 thus detects a session because when flows are managed according to respective destinations of IP packets, and there is TCP layer above IP layer, the switch 21 is capable of rearranging date items using sequence numbers in TCP. Further, this is because when data items transmitted from the transmitter 36 are a type having no sequence numbers (IP packets), the transmission scheduler 35 is required to rearrange the data items in units of TCP, whereas when data items transmitted from the transmitter 36 are protocol data (UDP: User Datagram Protocol, etc.) having no such sequence numbers as in TCP, the transmission scheduler 35 is incapable of controlling rearrangement of the data item.

The data type-determining section 32 is not necessarily required. When data items transmitted from the transmitter 36 are e.g. RLC (Radio Link Controller) packets on 3GPP (3rd Generation Partnership Project), and the type of the packets is UM (Unacknowledged Mode) or AM (Acknowledged Mode), the data items have sequence numbers, and therefore it is not necessary to perform determination of applicability by the data type-determining section 32. Even in this case, however, when the transmitter 36 performs data transmission in TrM (Transparent Mode), the data type-determining section 32 is required. In this case as well, however, if a type indicative of applicability of data items transmitted from the transmitter 36 is explicitly indicated before the switch 21 is used, the data type-determining section 32 is not required.

The data storage section 33 temporarily stores data items received by the receiver 31 via the data type-determining section 32. The data storage section 33 notifies the notification information controller 34 of the amount of data held back by temporary storage.

The notification information controller 34 determines a congestion state in the switch 21, based on the data reception rate notified from the receiver 31, the amount of data held back, which is notified from the data storage section 33, and a data transmission rate notified from the transmission scheduler 35. The notification information controller 34 obtains a rearrangement pattern of data items corresponding to the determined congestion state, from a table. The notification information controller 34 outputs the obtained rearrangement pattern of data items to the transmission scheduler 35.

When the data type-determining section 32 determines that a flow type of data items to be handled is controlled by the sequence numbers of the data items, the notification information controller 34 carries out the processing described above.

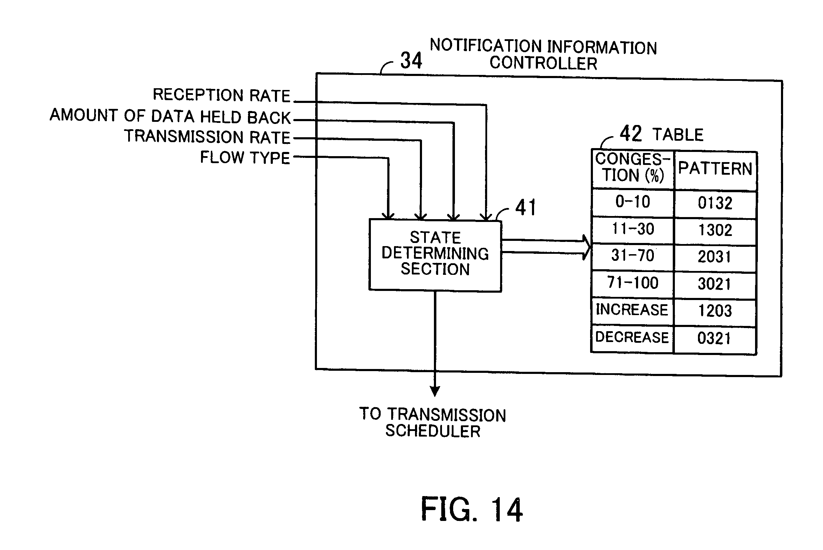

FIG. 14 is a functional block diagram of the notification information controller. As illustrated in FIG. 14, the notification information controller 34 includes a state determining section 41 and a table 42.

To the state determining section 41 are input the data reception rate notified from the receiver 31, the amount of data held back, which is notified from the data storage section 33, the data transmission rate notified from the transmission scheduler 35 and the flow type notified from the notification information controller 34. The state determining section 41 determines a congestion state in the switch 21 based on the data reception rate, the amount of data held back and the data transmission rate.

The table 42 stores information concerning congestion states and rearrangement patterns of data items associated with the respective congestion states. The rearrangement patterns of data items are indicated by modulo results, and are stored in the table 42. For example, it is determined from the table 42 that a rearrangement pattern of data items corresponding to a state of a congestion of 0 to 10% is 0132. Further, the table 42 stores information indicating whether the congestion state tends to increase or decrease, and modulo results corresponding thereto.

When determining a congestion state, the state determining section 41 obtains a pattern corresponding to the congestion state. For example, when a congestion state in the switch 21 is 20%, the state determining section 41 obtains a pattern of 1302 by referring to the table 42. Further, if the congestion state tends to increase, the state determining section 41 obtains a pattern of 1203. The state determining section 41 delivers each obtained pattern to the transmission scheduler 35.

Referring again to FIG. 13, the transmission scheduler 35 receives data items from the data storage section 33, and rearranges the data items in a pattern notified from the notification information controller 34. More specifically, the transmission scheduler 35 performs modulo calculation on the sequence numbers of the data items to thereby group the sequence numbers, and rearranges the data items such that the modulo results agree with the pattern notified from the notification information controller 34. For example, the transmission scheduler 35 stores data items from the data storage section 33 in a temporary data storage section 35a. The transmission scheduler 35 performs modulo calculation on the data items temporarily stored in the temporary data storage section 35a using a modulo value, and groups the data items in the temporary data storage section 35a using the modulo value. For example, when the modulo value is 4, the transmission scheduler 35 rearrange the data items within a 4-address range of the temporary data storage section 35a. The transmission scheduler 35 outputs the data items rearranged in the temporary data storage section 35a to the transmitter 36.

As described hereinabove with reference to FIG. 10, when data items are rearranged by segmenting IP packets, the transmission scheduler 35 performs the processing. Further, when a synchronization pattern is added to a start of a new group, the transmission scheduler 35 performs this processing. Further, the transmission scheduler 35 may be configured such that it does not always perform the rearrangement of data items but it performs the rearrangement of data items only when there has occurred a change in a pattern notified from the notification information controller 34a.

The transmitter 36 transmits data items delivered from the transmission scheduler 35 to a destination. When there are a plurality of subordinate access points, the transmitter 36 transmits the data items to a destination access point.

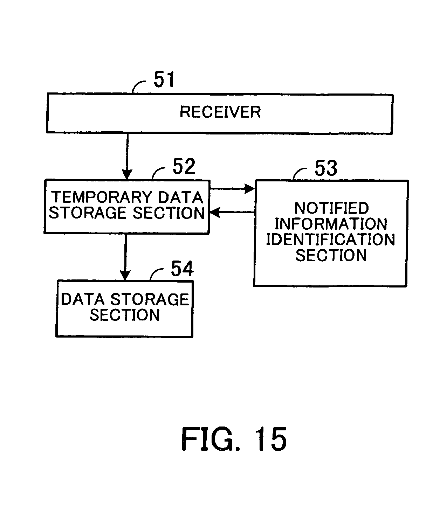

FIG. 15 is a functional block diagram of the terminal unit. The terminal unit 23a includes a receiver 51, a temporary data storage section 52, a notified information identification section 53 and a data storage section 54.

The receiver 51 receives data items transmitted from the switch 21. The receiver 51 outputs the received data items to the temporary data storage section 52.

The temporary data storage section 52 outputs the sequence numbers and session information of the received data items to the notified information identification section 53.

The notified information identification section 53 performs modulo calculation on the sequence numbers of the received data items, and groups the sequence numbers, to recognize a rearrangement pattern of the received data items. The notified information identification section 53 has the same table as the table 42 illustrated in FIG. 14, and obtains congestion information corresponding to a pattern of modulo results of the received data items by referring to the table. For example, when a pattern of modulo results is 2031, the notified information identification section 53 obtains congestion information saying that the congestion state in the switch 21 is 31 to 70%.

Further, the notified information identification section 53 rearranges data items that are transmitted after being rearranged by the switch 21, in a proper order. More specifically, the notified information identification section 53 rearranges data items temporarily stored in the temporary data storage section 52 such that modulo results of the data items are in a sequence of (0123) which is obtained by incrementing each modulo result by 1.

Further, when part of received data items is lost, the notified information identification section 53 performs a resynchronization process, as described hereinabove with reference to FIG. 11. Further, the notified information identification section 53 is configured such that when the switch 21 transmits data items after inserting a synchronization pattern into the data items as described hereinabove with reference to FIG. 12, the notified information identification section 53 detects a rearrangement pattern from modulo results of a group that have identical values in succession at a start thereof.

The data storage section 54 stores the data items that are rearranged in a proper order and transmitted from the temporary data storage section 52. The receiver 51 and the data storage section 54 may be configured such that the receiver 51 receives and directly transmits data items to the data storage section 54, and the data storage section 54 obtains information notified from the switch 21 and rearranges the data items in a proper order.

As described hereinabove, the switch 21 rearranges a transmission order of packets to be transmitted to the terminal unit 23a in each group according to a congestion state of data items in the switch 21. The terminal unit 23a obtains the congestion state in the switch 21 based on the rearrangement pattern of the packets. This enables the switch 21 to notify the terminal unit 23a of a plurality of congestion states.

Further, since the switch 21 rearranges packets using sequence numbers in TCP or the UM/AM of RLC, it is possible to notify the terminal unit 23a of a plurality of congestion states without adding new information to the packets.

Further, since it is possible to notify the terminal unit 23a of a plurality of congestion states without adding new information to the packets, it is possible to prevent congestion from occurring due to notification of the congestion.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

| | |
|---|---|
| 1 | relay device |
| 1a | transmission order controller |
| 1b | storage section |
| 2 | receiving-end device |
| 2a | receiver |
| 2b | detecting section |
| 2c | rearrangement controller |

## Claims

1. A relay device (1) that is operable to relay data items on a network, comprising:
grouping means (6a) operable to group the data items;
an information table (6b) operable to store information concerning congestion states in the relay device, the information being for notification to a terminal unit (8) that receives the data items, and a transmission order of the data items in a group, in association with each other;
transmission order-obtaining means (6c) operable to obtain the transmission order corresponding to the information concerning a particular said congestion state to be notified to the terminal unit (8), by referring to said information table; and
rearrangement means (6d) operable to rearrange the data items in the group in the transmission order obtained by said transmission order-obtaining means for transmission to the terminal unit (8).

2. The relay device (1) according to claim 1, further comprising modulo calculation means operable to perform modulo calculation on respective sequence numbers of the data items, and
wherein said grouping means groups the data items by a modulo value for the modulo calculation,
wherein said information table (1b) stores the transmission order of the data items according to modulo results of the modulo calculation,
wherein said transmission order-obtaining (6c) means obtains the modulo results corresponding to the information by referring to said information table, and
wherein said rearrangement means (6d) rearranges the data items such that the data items are arranged in an order of the modulo results obtained by said transmission order-obtaining means.

3. The relay device (1) according to claim 2, wherein the modulo results stored in said information table (6b) have a difference of not smaller than 2 between adjacent values thereof.

4. The relay device (1) according to claim 2, further comprising group-generating means operable to further group the grouped data items to generate new groups,
wherein said rearrangement means rearranges the data items such that the ones of the modulo results with reference to which the terminal unit performs synchronization are disposed at a start of the new group.

5. The relay device (1) according to claim 2, further comprising segmenting means operable to segment the data items, and
wherein said modulo calculation means performs the modulo calculation on the sequence numbers of the segmented data items.

6. The relay device (1) according to claim 2, wherein the data items are transmitted by applying TCP thereto.

7. The relay device (1) according to claim 2, wherein the data items are transmitted by applying UM, Unacknowledged Mode, or AM, Acknowledged Mode, of RLC, Radio Link Controller, thereto.

8. The relay device (1) according to claim 1, wherein said rearrangement means (6d) rearranges the data items only when the transmission order obtained by said transmission order-obtaining means (6c) is changed.

9. A terminal unit (8) that receives data items relayed by a relay device (1), comprising:
grouping means (6a) operable to group the data items;
transmission order-obtaining means (6c) operable to obtain a transmission order of the data items that are rearranged in a group and are transmitted by the relay device;
an information table (6b) configurable to store information concerning congestion states in the relay device, the information being for notification by the relay device, and the transmission order, in association with each other;
information obtaining means (6c) operable to obtain information corresponding to the transmission order obtained by said transmission order-obtaining means, by referring to said information table; and
rearrangement means (6d) operable to rearrange the transmission order of the data items back to an order of the data items arranged before being rearranged by the relay device based on the transmission order obtained by said transmission order-obtaining means.

10. The terminal unit (8) according to claim 9, further comprising modulo calculation means operable to perform modulo calculation on respective sequence numbers of the data items, and
wherein said grouping means (6a) groups the data items by a modulo value for the modulo calculation,
wherein said transmission order-obtaining means (6c) obtains modulo results of the modulo calculation on the data items in the group,
wherein the said information table (6b) stores the transmission order of the data items according to the modulo results of the modulo calculation,
wherein said information obtaining means (6c) obtains the information corresponding to the modulo results obtained by said transmission order-obtaining means, by referring to said information table, and
wherein said rearrangement means (6d) rearranges an order of the data items such that the modulo results become equal to values each incremented by 1.

11. The terminal unit according to claim 10, wherein said transmission-order obtaining means obtains the same modulo result in the group, said grouping means groups the data items from the modulo result.

12. The terminal unit (8) according to claim 10, wherein said transmission order-obtaining means (6c) obtains the same modulo result successively in the group, said transmission order-obtaining means obtains the transmission order from a portion where the same modulo result is successively obtained.

## Patentansprüche

1. Relaisvorrichtung (1), die betriebsfähig ist, um Datenelemente auf einem Netz weiterzuleiten, umfassend:
ein Gruppierungsmittel (6a), das betriebsfähig ist, um die Datenelemente zu gruppieren;
eine Informationstabelle (6b), die betriebsfähig ist, um Informationen in Bezug auf Überlastungszustände in der Relaisvorrichtung zu speichern, welche Informationen zur Mitteilung an ein Endgerät (8) bestimmt sind, das die Datenelemente empfängt, sowie eine Sendeordnung der Datenelemente in einer Gruppe, in gegenseitiger Zuordnung;
ein Sendeordnungsabrufmittel (6c), das betriebsfähig ist, um die Sendeordnung entsprechend den Informationen in Bezug auf solch einen besonderen Überlastungszustand, die an das Endgerät mitzuteilen sind, unter Bezugnahme auf die Informationstabelle abzurufen; und
ein Umordnungsmittel (6d), das betriebsfähig ist, um die Datenelemente in der Gruppe in der Sendeordnung, die durch das Sendeordnungsabrufmittel abgerufen wurde, zum Senden an das Endgerät (8) umzuordnen.

2. Relaisvorrichtung (1) nach Anspruch 1, die ferner ein Modulo-Berechnungsmittel umfasst, das betriebsfähig ist, um eine Modulo-Berechnung an jeweiligen Laufzahlen der Datenelemente auszuführen, und
bei der das Gruppierungsmittel die Datenelemente nach einem Modulo-Wert bei der Modulo-Berechnung gruppiert,
bei der die Informationstabelle (1b) die Sendeordnung der Datenelemente gemäß Modulo-Ergebnissen der Modulo-Berechnung speichert,
bei der das Sendeordnungsabrufmittel (6c) die Modulo-Ergebnisse entsprechend den Informationen unter Bezugnahme auf die Informationstabelle abruft und
bei der das Umordnungsmittel (6d) die Datenelemente so umordnet, dass die Datenelemente in einer Ordnung der Modulo-Ergebnisse angeordnet sind, die durch das Sendeordnungsabrufmittel abgerufen werden.

3. Relaisvorrichtung (1) nach Anspruch 2, bei der die in der Informationstabelle (6b) gespeicherten Modulo-Ergebnisse eine Differenz von nicht kleiner als 2 zwischen ihren benachbarten Werten aufweisen.

4. Relaisvorrichtung (1) nach Anspruch 2, die ferner ein Gruppierungserzeugungsmittel umfasst, das betriebsfähig ist, um die gruppierten Datenelemente weiter zu gruppieren, um neue Gruppen zu erzeugen,
bei der das Umordnungsmittel die Datenelemente so umordnet, dass diejenigen der Modulo-Ergebnisse, anhand derer das Endgerät eine Synchronisation ausführt, am Anfang der neuen Gruppe positioniert sind.

5. Relaisvorrichtung (1) nach Anspruch 2, die ferner ein Segmentierungsmittel umfasst, das betriebsfähig ist, um die Datenelemente zu segmentieren, und
bei der das Modulo-Berechnungsmittel die Modulo-Berechnung an den Laufzahlen der segmentierten Datenelemente ausführt.

6. Relaisvorrichtung (1) nach Anspruch 2, bei der die Datenelemente unter Anwendung des TCP gesendet werden.

7. Relaisvorrichtung (1) nach Anspruch 2, bei der die Datenelemente unter Anwendung des UM, Unacknowledged Mode, oder des AM, Acknowledged Mode, des RLC, Radio Link Control, gesendet werden.

8. Relaisvorrichtung (1) nach Anspruch 1, bei der das Umordnungsmittel (6d) die Datenelemente nur umordnet, wenn sich die durch das Sendeordnungsabrufmittel (6c) abgerufene Sendeordnung verändert.

9. Endgerät (8), das Datenelemente empfängt, die durch eine Relaisvorrichtung (1) weitergeleitet werden, umfassend:
ein Gruppierungsmittel (6a), das betriebsfähig ist, um die Datenelemente zu gruppieren;
ein Sendeordnungsabrufmittel (6c), das betriebsfähig ist, um eine Sendeordnung der Datenelemente abzurufen, die in einer Gruppe umgeordnet sind und durch die Relaisvorrichtung gesendet werden;
eine Informationstabelle (6b), die konfigurierbar ist, um Informationen in Bezug auf Überlastungszustände in der Relaisvorrichtung zu speichern, welche Informationen zur Mitteilung durch die Relaisvorrichtung bestimmt sind, sowie die Sendeordnung, in gegenseitiger Zuordnung;
ein Informationsabrufmittel (6c), das betriebsfähig ist, um Informationen entsprechend der durch das Sendeordnungsabrufmittel abgerufenen Sendeordnung unter Bezugnahme auf die Informationstabelle abzurufen; und
ein Umordnungsmittel (6d), das betriebsfähig ist, um die Sendeordnung der Datenelemente wieder zurück in eine Ordnung der Datenelemente zu ordnen, in der sie vor dem Umordnen durch die Relaisvorrichtung angeordnet waren, auf der Basis der durch das Sendeordnungsabrufmittel abgerufenen Sendeordnung.

10. Endgerät (8) nach Anspruch 9, das ferner ein Modulo-Berechnungsmittel umfasst, das betriebsfähig ist, um eine Modulo-Berechnung an jeweiligen Laufzahlen der Datenelemente auszuführen, und
bei dem das Gruppierungsmittel (6a) die Datenelemente nach einem Modulo-Wert bei der Modulo-Berechnung gruppiert,
bei der das Sendeordnungsabrufmittel (6c) Modulo-Ergebnisse der Modulo-Berechnung an den Datenelementen in der Gruppe abruft,
bei der die Informationstabelle (6b) die Sendeordnung der Datenelemente gemäß den Modulo-Ergebnissen der Modulo-Berechnung speichert,
bei der das Informationsabrufmittel (6c) die Informationen entsprechend den durch das Sendeordnungsabrufmittel abgerufenen Modulo-Ergebnissen unter Bezugnahme auf die Informationstabelle abruft und
bei der das Umordnungsmittel (6d) eine Ordnung der Datenelemente so umordnet, dass die Modulo-Ergebnisse Werten gleich sind, die jeweils um 1 inkrementiert sind.

11. Endgerät nach Anspruch 10, bei dem das Sendeordnungsabrufmittel dasselbe Modulo-Ergebnis in der Gruppe abruft, in der das Gruppierungsmittel die Datenelemente gemäß dem Modulo-Ergebnis gruppiert.

12. Endgerät (8) nach Anspruch 10, bei dem das Sendeordnungsabrufmittel (6c) sukzessive dasselbe Modulo-Ergebnis in der Gruppe abruft, in der das Sendeordnungsabrufmittel die Sendeordnung von einem Abschnitt an abruft, wo sukzessive dasselbe Modulo-Ergebnis abgerufen wird.

## Revendications

1. Dispositif de relais (1) qui est opérationnel pour relayer des éléments de données sur un réseau, comprenant :
des moyens de groupage (6a) opérationnels pour grouper les éléments de données ;
une table d'informations (6b) opérationnelle pour stocker des informations concernant des états de congestion dans le dispositif de relais, les informations étant pour notification à une unité de terminal (8) qui reçoit les éléments de données, et un ordre de transmission des éléments de données dans un groupe, en association les uns avec les autres ;
des moyens d'obtention d'ordre de transmission (6c) opérationnels pour obtenir l'ordre de transmission correspondant à l'information concernant l'un particulier desdits états de congestion à notifier à l'unité de terminal (8), en référence à ladite table d'informations ; et
des moyens de réorganisation (6d) opérationnels pour réorganiser les éléments de données dans le groupe dans l'ordre de transmission obtenu par lesdits moyens d'obtention d'ordre de transmission pour transmission à l'unité de terminal (8).

2. Dispositif de relais (1) selon la revendication 1, comprenant en outre des moyens de calcul modulo opérationnels pour effectuer un calcul modulo sur les numéros de séquence respectifs des éléments de données, et
dans lequel lesdits moyens de groupage groupent les éléments de données par une valeur modulo pour le calcul modulo,
dans lequel ladite table d'informations (1b) stocke l'ordre de transmission des éléments de données selon les résultats modulo du calcul modulo,
dans lequel lesdits moyens d'obtention d'ordre de transmission (6c) obtiennent les résultats modulo correspondant aux informations en référence à ladite table d'informations, et
dans lequel lesdits moyens de réorganisation (6d) réorganisent les éléments de données de sorte que les éléments de données soient organisés dans l'ordre des résultats modulo obtenus par lesdits moyens d'obtention d'ordre de transmission.

3. Dispositif de relais (1) selon la revendication 2, dans lequel les résultats modulo stockés dans ladite table d'informations (6b) ont une différence de pas moins de 2 entre des valeurs adjacentes de ceux-ci.

4. Dispositif de relais (1) selon la revendication 2, comprenant en outre des moyens de génération de groupe opérationnels pour grouper plus avant les éléments de données groupés pour générer de nouveaux groupes,
dans lequel lesdits moyens de réorganisation réorganisent les éléments de données de sorte que les résultats modulo en référence auxquels l'unité de terminal effectue la synchronisation soient disposés au début du nouveau groupe.

5. Dispositif de relais (1) selon la revendication 2, comprenant en outre des moyens de segmentation opérationnels pour segmenter les éléments de données, et
dans lequel lesdits moyens de calcul modulo effectuent le calcul modulo sur les numéros de séquence des éléments de données segmentés.

6. Dispositif de relais (1) selon la revendication 2, dans lequel les éléments de données sont transmis par application de TCP à ceux-ci.

7. Dispositif de relais (1) selon la revendication 2, dans lequel les éléments de données sont transmis par application d'UM, Unacknowledged Mode (mode sans accusé de réception) ou AM, Acknowledged Mode (mode avec accusé de réception) de RLC, Radio Link Controller (contrôleur de liaison radio) à ceux-ci.

8. Dispositif de relais (1) selon la revendication 1, dans lequel lesdits moyens de réorganisation (6d) réorganisent les éléments de données uniquement lorsque l'ordre de transmission obtenu par lesdits moyens d'obtention d'ordre de transmission (6c) est modifié.

9. Unité de terminal (8) qui reçoit des éléments de données relayés par un dispositif de relais (1), comprenant :
des moyens de groupage (6a) opérationnels pour grouper les éléments de données ;
des moyens d'obtention d'ordre de transmission (6c) opérationnels pour obtenir un ordre de transmission des éléments de données qui sont réorganisés dans un groupe et sont transmis par le dispositif de relais ;
une table d'informations (6b) configurable pour stocker des informations concernant des états de congestion dans le dispositif de relais, les informations étant pour notification par le dispositif de relais, et l'ordre de transmission, en association les uns avec les autres ;
des moyens d'obtention d'informations (6c) opérationnels pour obtenir des informations correspondant à l'ordre de transmission obtenu par lesdits moyens d'obtention d'ordre de transmission, en référence à ladite table d'informations ; et
des moyens de réorganisation (6d) opérationnels pour réorganiser l'ordre de transmission des éléments de données de retour à l'ordre des éléments de données organisés avant d'être réorganisés par le dispositif de relais sur la base de l'ordre de transmission obtenu par lesdits moyens d'obtention d'ordre de transmission.

10. Unité de terminal (8) selon la revendication 9, comprenant en outre des moyens de calcul modulo opérationnels pour effectuer un calcul modulo sur les numéros de séquence respectifs des éléments de données, et
dans laquelle lesdits moyens de groupage (6a) groupent les éléments de données par une valeur modulo pour le calcul modulo,
dans laquelle lesdits moyens d'obtention d'ordre de transmission (6c) obtiennent les résultats modulo du calcul modulo sur les éléments de données dans le groupe,
dans laquelle la ladite table d'informations (6b) stocke l'ordre de transmission des éléments de données selon les résultats modulo du calcul modulo,
dans laquelle lesdits moyens d'obtention d'informations (6c) obtiennent les informations correspondant aux résultats modulo obtenus par lesdits moyens d'obtention d'ordre de transmission, en référence à ladite table d'informations, et
dans laquelle lesdits moyens de réorganisation (6d) réorganisent l'ordre des éléments de données de sorte que les résultats modulo deviennent égaux à des valeurs chacune incrémentées de 1.

11. Unité de terminal selon la revendication 10, dans laquelle lesdits moyens d'obtention d'ordre de transmission obtiennent le même résultat modulo dans le groupe, lesdits moyens de groupage groupent les éléments de données à partir du résultat modulo.

12. Unité de terminal (8) selon la revendication 10, dans laquelle lesdits moyens d'obtention d'ordre de transmission (6c) obtiennent le même résultat modulo successivement dans le groupe, lesdits moyens d'obtention d'ordre de transmission obtiennent l'ordre de transmission à partir d'une partie dans laquelle le même résultat modulo est successivement obtenu.
